# EUROPEAN PATENT APPLICATION

(11) **EP 4 464 558 A1**
(43) Date of publication of application: **20.11.2024**
(21) Application number: 24176453.9
(22) Date of filing: 16.05.2024
(51) Int. Cl.: B60R 3/00, B60R 3/02

(54) **VEHICLE DOOR WELL STEP APPARATUS**

(30) Priority: 16.05.2023 US 202318318633
(71) Applicant: Pride Manufacturing Company, LLC, Brentwood, Tennessee 37027 (US)
(72) Inventor: LEWIS, Rodney, Brentwood, TN (US); SCHULTE, Mark, Brentwood, TN (US)
(74) Representative: Wilding, Charlotte Katherine

(57) **Abstract**

A step apparatus that removably couples to a door latch element of a door well of a vehicle is disclosed. The step apparatus can include a load-supporting step structure (210), an elongated support element (104), and an axle structure (106) rotatably coupling the load-supporting step structure to the elongated support element. The elongated support element includes a hook-shaped element (284) configured to removably couple to the door latch element of the door well of a vehicle. The load-supporting step structure is configured to support the weight of a person when standing on the load-supporting step structure while the step apparatus is removably coupled to the door latch element, enabling the person to reach the roof of the vehicle.

## Description

### CROSS-REFERENCE TO RELATED APPLICATIONS

This application is a continuation-in-part of application serial no. 17/308,237, filed on May 5, 2021, which is a continuation of application serial no. 16/145,428, filed on September 28, 2018, now Patent No. 11,007,943, which is a continuation of application serial no. 15/864,655, filed on January 8, 2018, now Patent No. 10,155,479, which claims benefit of provisional application serial no. 62/433,890, filed on January 9, 2017. The aforementioned patent applications are hereby incorporated by reference in their entireties.

### FIELD

The present disclosure generally relates to a step apparatus that removably couples to a door latch element of a door well of a vehicle.

### BACKGROUND

People commonly need to access the roof of their vehicles for various reasons. For example, people have routinely placed items on the roof of their vehicle, such as outdoor equipment, luggage, or other items, which generally are placed on a rack on top of their vehicle. People may also need to access the roof of their vehicle for cleaning or repair purposes. For taller vehicles and/or short individuals, it can be difficult to easily access the roof of a vehicle.

It is with these observations in mind, among others, that various aspects of the present disclosure were conceived and developed.

### BRIEF DESCRIPTION OF THE DRAWINGS

FIG. **1** is a perspective view of one embodiment of a step apparatus.
FIG. **2** is an exploded view of the step apparatus of FIG. **1****.**
FIG. **3** is a first side view of the step apparatus of FIG. **1****.**
FIG. **4** is an opposite second side view of the step apparatus of FIG. **1****.**
FIG. **5** is a front view of the step apparatus of FIG. **1****.**
FIG. **6** is a rear view of the step apparatus of FIG. **1****.**
FIG. **7A** is a cross-sectional side view of the step apparatus in a first position; and FIG. **7B** is a cross-sectional side view of the step apparatus of FIG. **7A** being rotated from the first position to a second position.
FIG. **8A** is a cross-sectional side view of the step apparatus in the first position; and FIG. **8B** is a cross-sectional side view of the step apparatus of FIG. **8A** being rotated from the first position to a folded position.
FIG. **9A** is a bottom view of the step apparatus in the first position; and FIG. **9B** is a corresponding top view of the step apparatus of FIG. **9A** in the first position.
FIG. **10A** is a bottom view of the step apparatus in the second position; and FIG. **10B** is a corresponding top view of the step apparatus of FIG. **10A** in the second position.
FIG. **11A** is a bottom view of the step apparatus in the folded position; and FIG. **11B** is a corresponding top view of the step apparatus of FIG. **11A** in the folded position.
FIG. **12** is a side view of the step apparatus in the first position removably coupled to a door latch element within a door well of a vehicle.
FIG. **13** is a side view of the step apparatus in the second position removably coupled to a door latch element within a door well of a vehicle.
FIG. **14** is a side view of the step apparatus in the folded position.
FIG. **15** is a rear view of the axle structure and elongated support element within the step apparatus.

Corresponding reference characters indicate corresponding elements among the view of the drawings. The headings used in the figures do not limit the scope of the claims.

### DETAILED DESCRIPTION

The present disclosure generally relates to a step apparatus that removably couples to a door latch element of a door well of a vehicle. The step apparatus can include a load-supporting step structure, an elongated support element, and an axle structure rotatably coupling the load-supporting step structure to the elongated support element. The elongated support element can include a hook-shaped element configured to removably couple to the door latch element of the door well of a vehicle. The load-supporting step structure is configured to support the weight of a person when standing on the load-supporting step structure while the step apparatus is removably coupled to the door latch element. The step apparatus is further configured to include two or more positions of the elongated support element in relation to the load-supporting step structure, allowing the step apparatus to be removably coupled to both horizontal and angled door latch elements of vehicle door wells when the vehicle door is open, as well as be folded for easy storage.

The step apparatus can thus be used to easily access the roof of the vehicle to which it is coupled. The removability of the step apparatus from the door well of the vehicle allows for use of the step apparatus without alteration to the vehicle. The two or more positions of the step apparatus allows for use of the step apparatus with various styles of vehicle door wells, as well as easy storage when not in use. As such, the present disclosure provides a unique and novel manner to provide a step to access the roof of a vehicle without alteration to the vehicle itself.

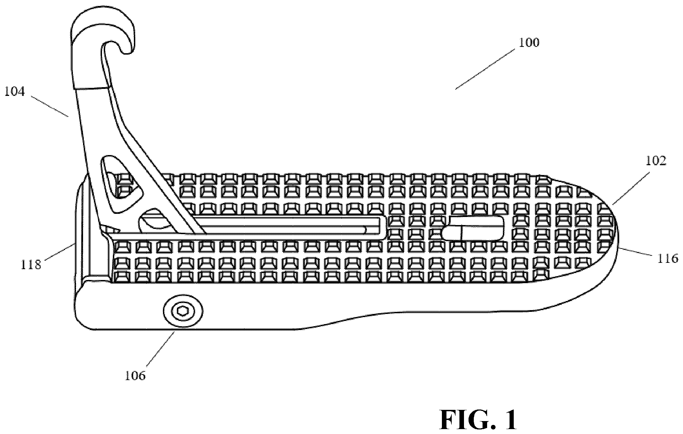

Referring to FIG. **1****,** an embodiment of the step apparatus **100** is shown. The step apparatus **100** includes a load-supporting step structure **102** engaged to an elongated support element **104** through an axle structure **106.** The step apparatus **100** defines a distal end **116** and a proximal end **118.** The elongated support element **104** is rotatably coupled to the load-supporting step structure **102** by the axle structure **106** at or near the proximal end **118** of the step structure **100.** The elongated support element **104** is operable to rotate about the axle structure **106.** Thus, the step apparatus **100** is capable of rotating between two or more positions as described herein.

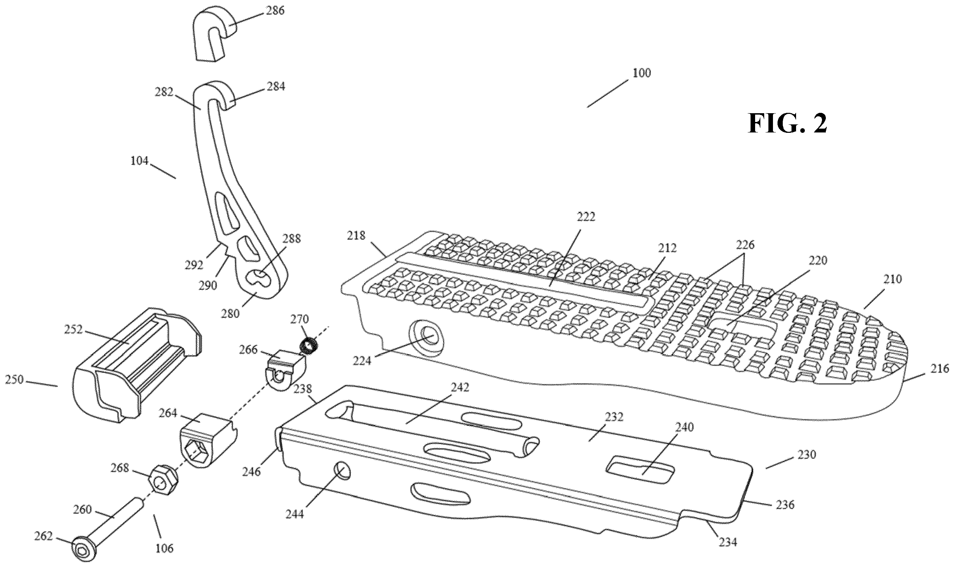

An exploded view of the step apparatus **100** is depicted in FIG. **2****.** As shown, the step apparatus **100** may include a step portion **210,** a step structure plate **230,** and a backend housing **250,** which when engaged together form the load-supporting step structure **102.** The step portion **210** provides a surface for a person to step, while the step structure plate **230** provides additional support for the load-supporting step structure **102** such that the load-supporting step structure **102** can support a person's weight while stepping on the step portion **210** of the load-supporting step structure **102.** The backend housing **250** holds the step structure plate **230** and provides a surface at the proximal end **118** of the step apparatus **100** that abuts the door well of a vehicle when the step apparatus **100** is coupled to a door latch element.

The step portion **210** of the load-supporting step structure **102** defines a top portion **212,** an opposite bottom portion **214,** a distal end **216,** and an opposite proximal end **218.** The distal end **216** and proximal end **218** of the step portion **210** are located at or near the distal end **116** and proximal end **118** of the load-supporting step structure **102** respectively, when the step portion **210** is coupled to the step structure plate **230.** The step portion **210** further defines a recess **220,** an elongated slot **222,** and an axle bore **224.** As shown, the step portion **210** may further include a plurality of protrusions **226** along the top portion **212** of the step portion **210.** In one aspect, the protrusions **226** provide a textured surface on which a person can step to reduce the risk of slipping while placing the person's body weight on the load-supporting step structure **102.**

The step structure plate **230** of the load-supporting step structure **102** defines a top portion **232,** an opposite bottom portion **234,** a distal end **236,** and an opposite proximal end **238.** The distal end **236** and proximal end **238** of the step support structure **230** are also located at or near the distal end **116** and proximal end **118** of the load-supporting step structure **102,** respectively. The step structure plate **230** further defines a recess **240,** an elongated slot **242,** and an axle bore **244.** The step structure plate **230** further may form a flange **246** configured to extend out and downward from the proximal end **238** of the step structure plate **230.**

In some embodiments, the backend housing **250** includes a flange slot **252.** The flange **246** of the step structure plate **230** is configured to be inserted into the flange slot **252** when the step portion **210,** step structure plate **230,** and backend housing **250** are coupled together to form the load-supporting step structure **102.**

When coupled together, the top portion **232** of the step support plate **230** contacts the bottom portion **214** of the step portion **210.** When the flange **246** is inserted into the flange slot **252** of the backend housing **250** and the step portion **210** is placed on top of the step support plate **230,** the proximal end **238** of the step support plate **230** sits flush with the backend housing **250** and the proximal end **218** of the step portion **210** sits on top and is flush with the backend housing **250.** In addition, when coupled together, the recess **240,** elongated slot **242,** and axle bore **244** of the step support structure **230** will align with the recess **220,** elongated slot **222,** and axle bore **224** of the step portion **210,** respectively. Thus, when coupled together, the step portion **210,** step support plate **230,** and backend housing **250** form the load-supporting step structure **102** having a distal end **116** and a proximal end **118,** while the axle bore **224/244** is configured to accept insertion of the axle structure **106** and the elongated slot **222/242** is configured to accept insertion the elongated support structure **104.**

FIG. **2** further depicts the structure of the elongated support element **104.** The elongated support element **104** forms a first end **280,** a second end **282,** and an axle aperture **288.** In particular, the first end **280** is proximate to the load-supporting step structure **102** such that the first end **280** is located at or near the proximal end **218** of the load-supporting step structure **102.** As shown, the second end **282** is distal from the load-supporting step structure **102,** while the axle aperture **288** is positioned at the first end **280** of the elongated support element **104.** The elongated support element **104** may include additional apertures positioned between the first end **280** and the second end **282** or may only include the axle aperture **288.**

A hook-shaped element **284** is defined at the second end **282** of the elongated support element **104.** The hook-shaped element **284** is configured to be removably coupled to a door latch element of a door well as shall be discussed in greater detail below. In some embodiments, the elongated support element **104** may further include a cover **286.** The cover **286** is preferably the same shape as the hook-shaped element **284** and configured to cover the second end **282** of the elongated support element **104.** In other embodiments, the cover may not be used, or alternatively may cover more than the second end **282** of the elongated support element **104.**

The elongated support element **104** also defines a first abutment portion **290** and a second abutment portion **292.** The first abutment portion **290** and the second abutment portion **292** protrude from the elongated support element **104** and each forms a flat surface having a unique angle that abuts the step structure plate **230.**

FIG. **2** further depicts the components of the axle structure **106** that couples the load-supporting step structure **102** to the elongated support element **104.** The axle structure **106** is configured such that the elongated support element **104** may be removably coupled to the load supporting step structure **102.** The axle structure **106** may also be configured such that the elongated support element **104** is permanently coupled to the load supporting step structure **102.** The axle structure **106** includes an axle **260** having an axle head **262,** a first axle housing **264,** a second axle housing **266,** and axle nut **268,** and a spring **270.** The axle **260** is configured to pass through the axle bore **224** of the step portion **210,** the axle bore **244** of the step structure plate **230,** and the axle aperture **288** of the elongated support element **104,** thereby spanning from one side of the load-supporting step structure **102** to the other. Thus, the axle structure **106** rotatably couples the elongated support element **104** to the load-supporting step structure **102.**

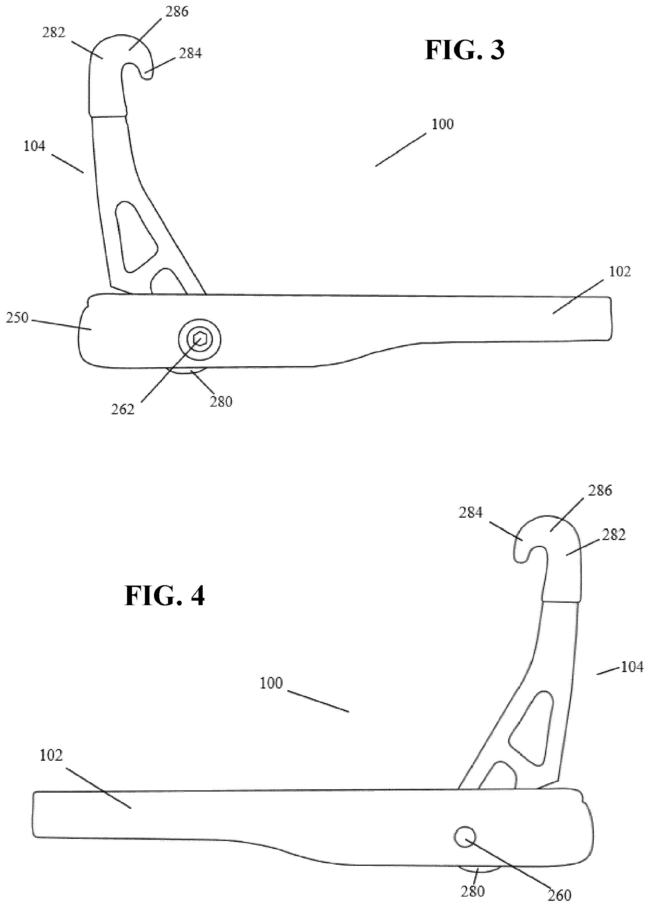

FIGS. **3-6** depict the step apparatus **100** in a first position. Preferably, in the first position, the elongated support element **104** is at or substantially at a perpendicular angle in relation to the load-supporting step structure **102.** In other embodiments, the angle of the first position may differ.

In these embodiments, the elongated support element **104** includes a cover **286** that encloses the second end **282** of the elongated support element **104,** and thus also the hook-shaped element **284.** As shown, the cover **286** preferably matches the shape of the hook-shaped element **284,** and is preferably made of a soft, non-metal material. In some embodiments, the cover **286** only covers the hook-shaped element **284,** while in other embodiments, the cover **286** extends further down the elongated support element **104** towards the second abutment portion **292.** The cover **286** provides a soft contact point for the hook-shaped element **284** when removably coupled to a door latch element of a vehicle door well.

When viewing the step apparatus **100** from its sides as shown in FIGS. **3-4****,** the axle structure **106** spans from one side of the load-supporting step structure **102** to the opposite side. As shown in FIG. **3****,** the axle head **262** is accessible from one side such that the axle structure **106** can be tightened, loosened, or removed from the load-supporting step structure **102.** In one embodiment, the axle head **262** includes a hexagonal-recess for purposes of tightening the axle **260,** but other embodiments may use other head shapes without departing from the concepts disclosed herein. As shown in FIG. **4****,** the opposite end of the axle **260** is visible through the axle bore **224** of the step portion **210,** and preferably sits flush with the side of the step portion **210.** As discussed, removing the axle structure **106** from the step apparatus **100** will decouple the elongated support element **104** from the load-supporting step structure **102.**

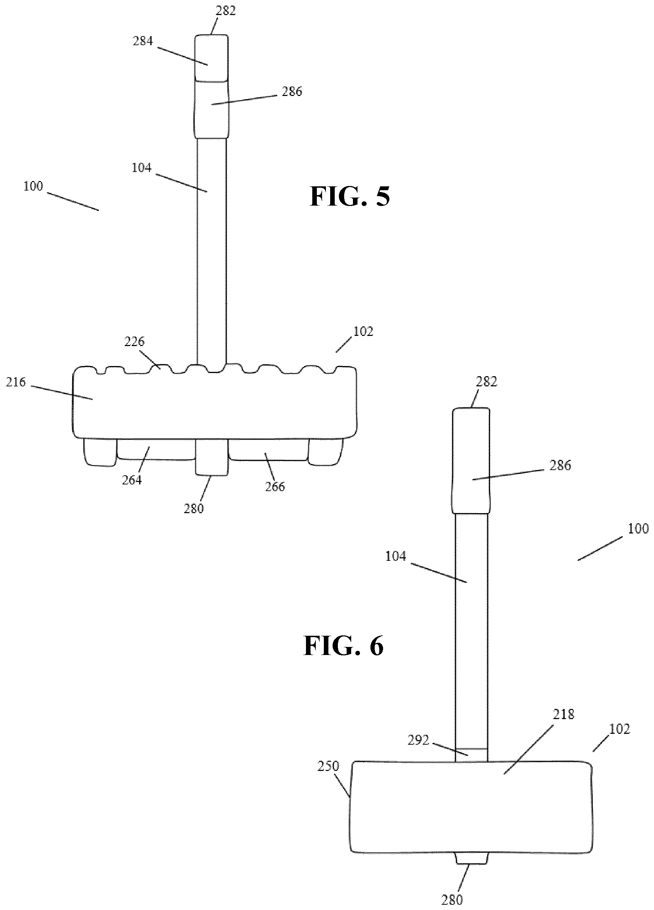

When viewing the step apparatus **100** from the front (as shown in FIG. **5**), the elongated support element **104** is positioned central to the load-supporting step structure **102** and is placed between the first axle housing **264** and the second axle housing **266.** As shown, the first end **280** of the elongated support element **104** extends below the body of the load-supporting step structure **102,** and is thus visible when viewed from the front, back, or sides.

When viewing the step apparatus **100** from the back (as shown in FIG. **6**), the backend housing **250** and the proximal end **218** of the step portion **210** make up the proximal end **118** of the load-supporting step structure **102.** Visible above the proximal end **118** of the load-supporting step structure **102** is the second abutment portion **292,** which is not engaged while the step apparatus **100** is in its first position. Additionally, while the protrusions **226** are generally visible from the front of the step apparatus **100** (as shown in **FIG. 5**), the protrusions **226** are generally not visible when viewed from the rear, as the proximal end **118** of the load-supporting step structure **102** is at the same level or higher than the protrusions **226.**

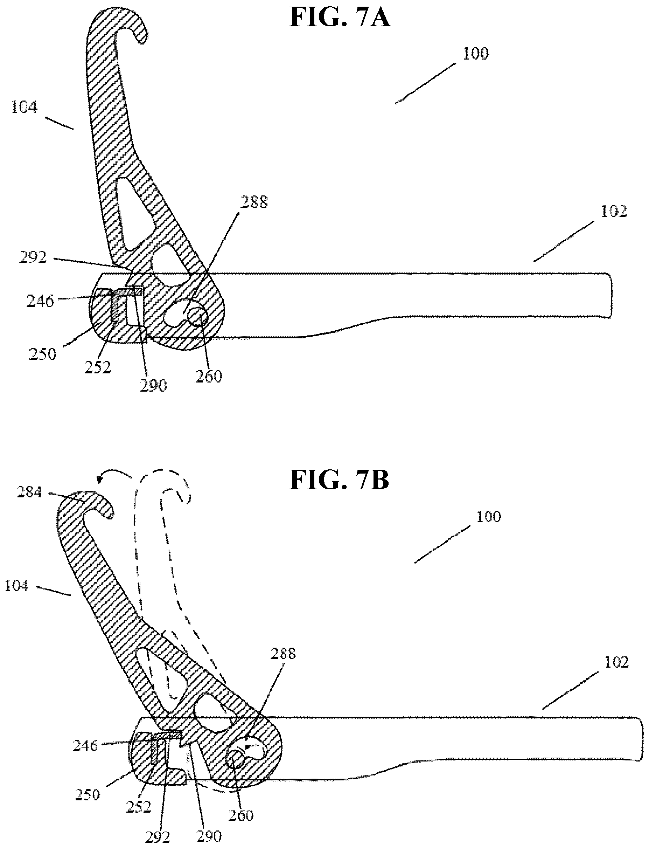

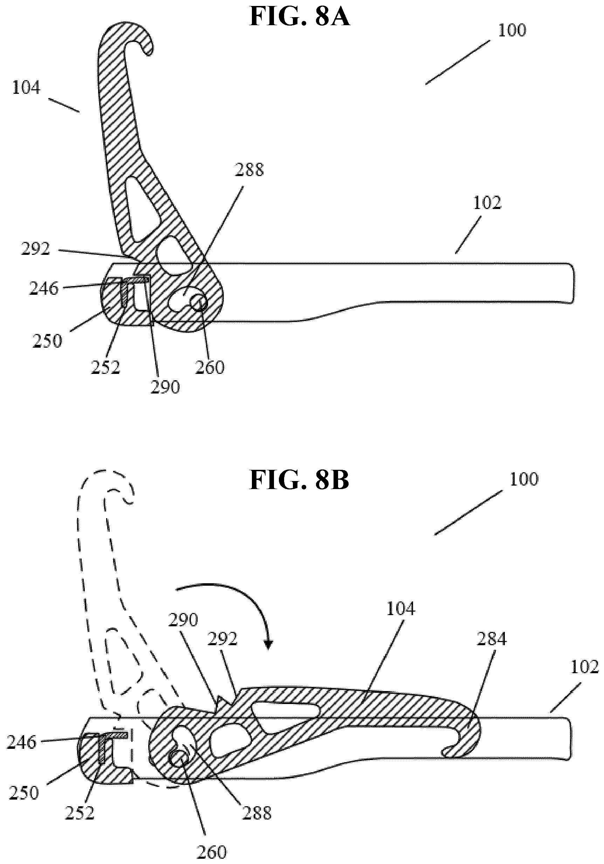

FIGS. **7A-7B** and **8A-8B** depict the step apparatus **100** shifting from its first position (FIGS. **7A** and **8A**) to a second position (FIG. **7B**) and a folded position (FIG. **8B**). Referring to FIGS. **7A** and **8A****,** the step apparatus **100** is depicted in its first position. As shown, the flange **246** of the step structure plate **230** is inserted into the flange slot **252** of the backend housing **250,** thereby securing the step structure plate **230** within the load-supporting step structure **102.** The first abutment portion **290** of the elongated support element **104** abuts the top portion **232** of the step structure plate **230** proximate the flange **246,** thereby providing support for the load-supporting step structure **102.** In an exemplary embodiment, the first abutment portion **290** is angled such that the position of the elongated support element **104** is at a substantially perpendicular angle with respect to the load-supporting step structure **102.**

As also shown in FIGS. **7A** and **8A****,** the axle **260** passes through the axle aperture **288** of the elongated support element **104.** In one embodiment, the axle aperture **288** is bean-shaped such that the axle aperture **288** has a first position and a second position with a hump formed between the first position and the second position. When the step apparatus **100** is in its first position, the axle **260** passes through the axle aperture **288** in its first position and is secured by the force of the first abutment portion **290** abutting the step structure plate **230** and the axle **260** abutting the edge of the axle aperture **288** in its first position when a person steps on the load-supporting step structure **102.**

FIG. **7B** depicts the step apparatus **100** shifting from the first position to the second position. In an embodiment, when the step apparatus **100** shifts from the first position to the second position, the load-supporting step structure **102,** including the backend housing **250** and step structure plate **230,** remain stationary. To shift the step apparatus **100** from the first position to the second position, the elongated support element **104** is first pushed towards the distal end **116** of the load-supporting step structure **102** without rotating the elongated support element **114.** Pushing the elongated support element **104** towards the distal end **116** of the load-supporting step structure **102** enables axle **260** to shift from the first position of the axle aperture **288** to the second position of the axle aperture **288.** Once the axle **260** is shifted to the second position of the axle aperture **288,** the hook-shaped portion **284** of the elongated support element **104** is able to be rotated towards the proximal end **118** of the load-supporting structure **102** until the second abutment portion **292** of the elongated support element **104** abuts the top portion **232** of the step support plate **230.** This configuration allows the elongated support element **104** to rotate about the axle **260,** thereby shifting the elongated support element **104** into the second position of the axle aperture **288** in relation to the axle **260.** Once the elongated support element **104** is shifted from the first position of the axle aperture **288** to the second position of the axle aperture **288,** the second abutment portion **292** of the elongated support element **104** abuts the top portion **232** of the step support plate **230,** thereby securing the step apparatus **100** in its second position.

In one embodiment, the second abutment portion **292** is angled such that the position of the elongated support element **104** is at a substantially obtuse angle with respect to the load-supporting step structure **102.** In other embodiments, the angle of the first position may differ. Similar to when the step apparatus **100** is in its first position, when the step apparatus **100** is in its second position, the step apparatus **100** is secured in the second position by the force of the second abutment portion **292** abutting the step structure plate **230** and the axle **260** abutting the edge of the axle aperture **288** in its second position when a person steps on the load-supporting step structure **102.** Pulling the elongated support element **104** back towards the first position will return the step apparatus **100** to its first position depicted in FIGS. **7A** and **8A** through the same mechanism but reversed.

FIG. **8B** depicts the step apparatus **100** shifting from the first position to the folded position. In one embodiment, when the step apparatus **100** shifts from the first position to the folded position, the load-supporting step structure **102,** including the backend housing **250** and step structure plate **230,** remain stationary. To shift the step apparatus **100** from the first position to the folded position, the second end **282** of the elongated support element **104** is pushed towards the distal end **116** of the load-supporting step structure **102..** Once the elongated support element **104** is shifted from the first position to the folded position, neither the first abutment portion **290** nor the second abutment portion **292** of the elongated support element **104** abut the top portion **232** of the step support plate **230.** Instead, the elongated support element **104** is folded down into the elongated slot **222** of the step portion **210** and the elongated slot **242** of the step structure plate **230.** The recess **220** of the step portion **210** and the recess **240** of the step structure plate **230** are configured to receive the second end **282** and the hook-shaped portion **284** of the elongated support element **104** such that the elongated support element **104** is substantially housed within the load-supporting step structure **102.**

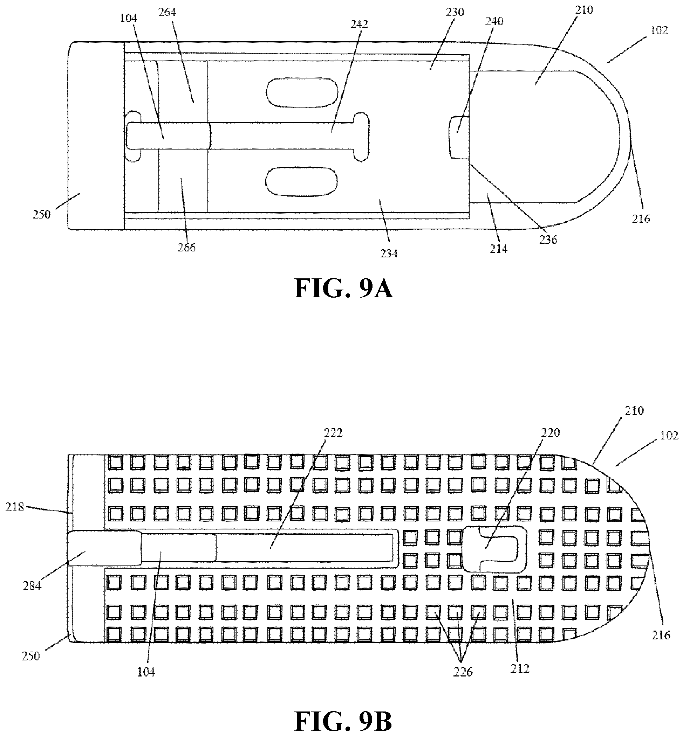

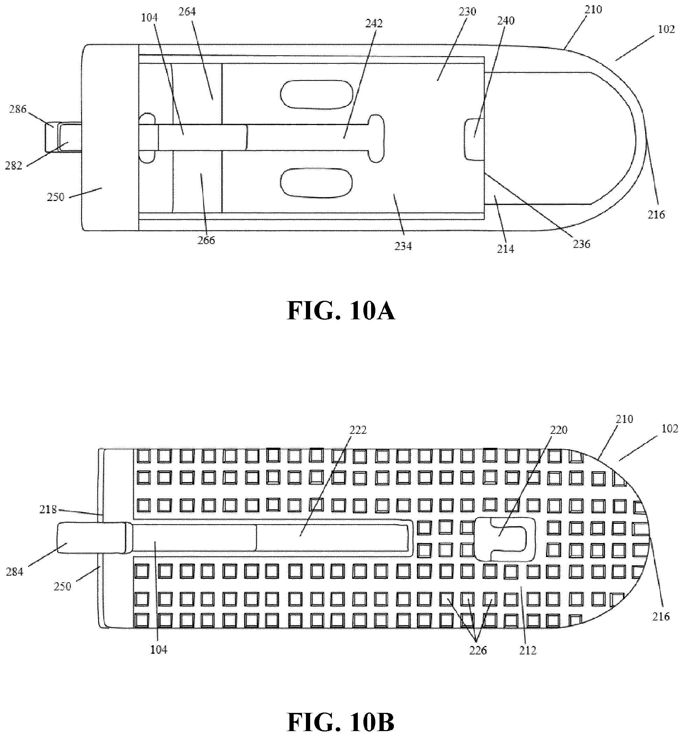

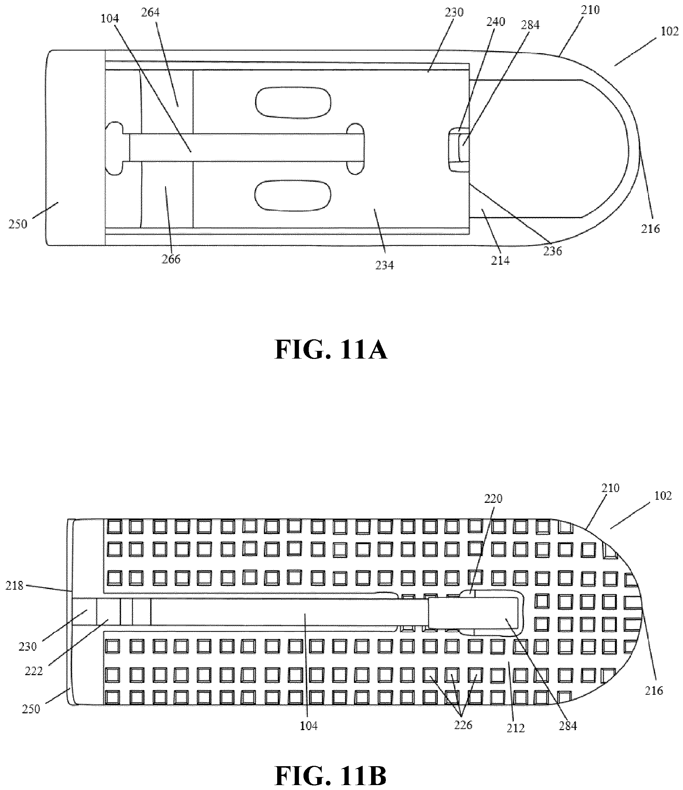

FIGS. **9A** and **9B** depict the respective top view and bottom view of the step apparatus **100** in its first position, while FIGS. **10A** and **10B** depict the respective top view and bottom view of the step apparatus **100** in its second position. Finally, FIGS. **11A** and **11B** depict the respective top view and bottom view of the step apparatus **100** in its folded position. As shown and previously described, when the step portion **210,** step structure plate **230,** and backend housing **250** are coupled to form the elongated slot **222** of the step portion **210** and the elongated slot **242** of the step structure plate **230** align such that a single elongated slot is present in the load-supporting step structure **102.** Additionally, the recess **220** of the step portion **210** and the recess **240** of the step structure plate **230** similarly align to form a single recess for the load-supporting step structure **102.** As shown in the embodiment of FIGS. **9A****,** **10A****,** and **11A****,** step support plate **230** is configured to sit inside the body of the step portion **210** and is preferably the same or smaller in size in comparison to the step portion **210.** When viewed from the bottom, the bottom portion **234** of the step structure plate **230** is visible, and the top portion **232** of the step structure plate **230** abuts the bottom portion **214** of the step portion **210.**

As further shown in FIGS. **9B****,** **10B****,** and **11B****,** the top portion **212** of the step portion **210** forms a plurality of protrusions **226.** In one embodiment, the plurality of protrusions **226** provide a textured surface for a person to step upon, thereby minimizing the chance of slipping off the load-bearing step structure **102.** In one embodiment depicted by FIG. **9B****,** the protrusions **226** are truncated pyramids protruding out from the top surface **212** of the step portion **210.** It is appreciated that other shapes and sizes of the protrusions **226** may be used without departing from the scope of the disclosure. Generally, the protrusions **226** may be formed at the same time as the step portion **210** as a unitary component, or alternatively may be added to the top portion **212** of the step portion **210** after forming the step portion **210.**

As further shown in FIGS. **11A** and **11B****,** when the step apparatus **100** in its folded position, the aligned elongated slots **222/242** of the load-supporting step structure **102** receive the elongated support element **104** such that the elongated support element **104** is positioned substantially within the body of the load-supporting step structure **102.** Additionally, the aligned recesses **220/240** of the load-supporting step structure **102** receive the hook-shaped element **284** of the elongated support element **104** such that the hook-shaped element **284** is also positioned substantially within the body of the load-supporting step structure **102.** Thus, when the step apparatus **100** is in its folded position, it can be easily stored within a vehicle.

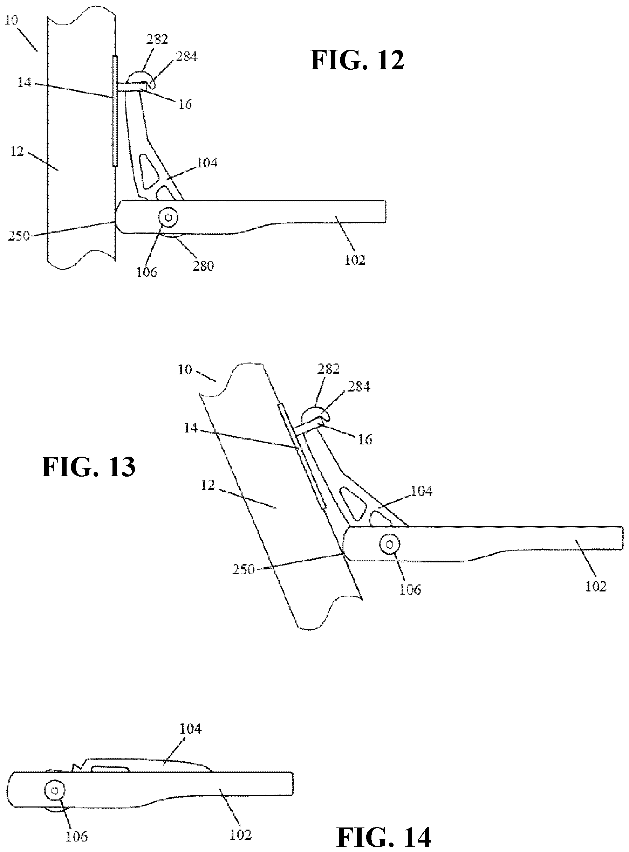

FIGS. **12-14** depict the step structure **100** in each respective position placed on a door latch element **10** of a vehicle. As shown, the door latch element **10** generally includes a door frame **12,** a base plate **14,** and a U-shaped latch element **16.** These descriptions are for illustrative purposes, and it is appreciated that the step apparatus **100** is intended to work with many types of vehicle door wells having a U-shaped latch element **16** for the step apparatus **100** to removably couple.

As shown in FIGS. **12** and **13****,** the step apparatus **100** is removably coupled to the door latch element **10** of a vehicle. The second end **282** of the elongated support element **104** having the hook-shaped element **284** is positioned through the U-shaped latch element **16** and hooked onto U-shaped latch element **16.** Once the hook-shaped element **284** is hooked onto the U-shaped latch element **16,** the backend housing **250,** and thus the proximal end **118** of the load-supporting step structure **102,** abuts the door frame **12** of the vehicle. Thus, when a person steps on the load-supporting step structure **102** when the step apparatus **100** is removably coupled to the door latch element **10,** the proximal end **118** of the load-supporting step structure **102** abuts the door frame **12** while the hook-shaped element **284** of the elongated support element **104** becomes engaged to the outer portion of the U-shaped latch element **16.** Thus, in one embodiment, the elongated support element **104** does not contact the door frame **12.**

As shown in FIG. **12****,** the load-supporting step structure **102** of the step apparatus **100** in its first position provides a horizontal surface for a person to step on to access the roof of a vehicle. This first position provides the horizontal surface where the door latch element **10** is vertical in relation to the ground surface. As shown in **FIG. 13****,** the load-supporting step structure **102** of the step apparatus **100** in its second position also provides a horizontal surface for a person to step to access the roof of a vehicle. This second position provides the horizontal surface where the door latch element **10** is in an angled position in relation to the ground surface. When the step apparatus **100** is in is folded position, as shown in FIG. **14****,** the step apparatus **100** folds to a substantially flat position for storage in the vehicle.

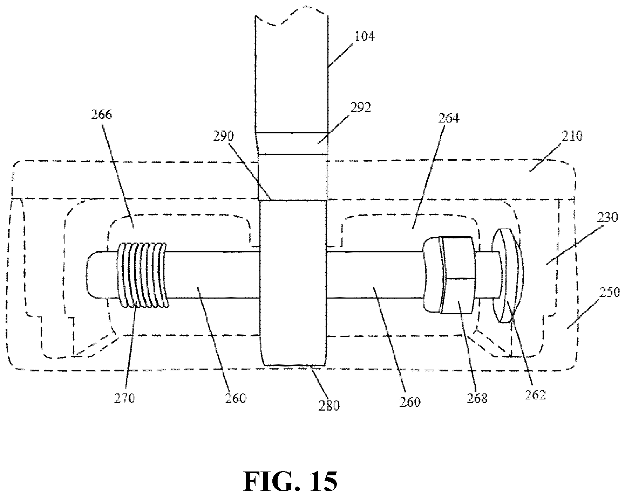

FIG. **15** depicts the internal structure of the axle structure **106** when the step apparatus **100** is in any position. As previously shown and discussed, the axle structure **106** includes the axle **260** having the axle head **262,** first axle housing **264,** second axle housing **266,** and axle nut **268.** The axle **260** is first positioned through first the axle bore **224** of the step portion **210,** then through the axle bore **244** of the step structure plate **230,** the first axle housing **264,** the axle aperture **288** of the elongated support element **104,** the second axle housing **266,** the opposing axle bore **244** of the step structure plate **230,** and then finally the opposing axle bore **224** of the step portion **210.** Contained within the first axle housing **264** is the axle nut **268.** The first axle housing **264** is configured such that the axle nut **268** is unable to rotate within the first axle housing **264,** thereby allowing the axle **260** to be tightened when removably coupling the elongated support element **104** to the load-supporting step structure **102.** Once tightened, the elongated support element **104** is able to rotate about the axle **260,** thereby enabling the elongated support element **104** to freely shift between the first position, second position, and folded position.

In some embodiments, the axle structure **106** may also include a spring **270.** In these embodiments, the spring **270** is housed within the second axle housing **266** on the opposite side of the elongated support element **104** from the first axle housing **264.** The spring **270** acts to provide additional tension on the elongated support element **104** when the axle structure **106** is secured, thus providing feedback to a person using the step apparatus **100.** Additionally, the spring **270** provides additional tension when shifting the step apparatus **100** between the first position, second position, and folded position.

It should be understood from the foregoing that, while particular embodiments have been illustrated and described, various modifications can be made thereto without departing from the spirit and scope of the invention as will be apparent to those skilled in the art. Such changes and modifications are within the scope and teachings of this invention as defined in the claims appended hereto.

### CLAUSES

1. A step apparatus, comprising:
   a step structure defining an axle bore;
   an elongated support element coupled to the step structure, the elongated support element having a hook-shaped element and an axle aperture; and
   an axle coupling the elongated support element to the step structure through the axle bore and axle aperture;
   wherein the elongated support element is operable for rotating position about the axle, and the hook-shaped element is configured to be removably coupled to a latch element of a vehicle door well.
2. The step apparatus of clause 1, wherein the elongated support element is operable to rotate between a first position and a folded position.
3. The step apparatus of clause 2, wherein the elongated support element in the first position is at a substantially perpendicular angle in relation to the step structure.
4. The step apparatus of clause 1, wherein the elongated support element is removably coupled to the step structure.
5. The step apparatus of clause 1, wherein the axle aperture includes a first position and a second position through which the axle rotates.
6. The step apparatus of clause 1, wherein the axle is housed by the axle bore, the axle aperture, and one or more axle housings.
7. The step apparatus of clause 6, wherein the one or more axle housings include a spring.
8. A step apparatus, comprising:
   a step structure having a proximal end and a distal end;
   an elongated support element having a first end and a second end, the first end of the elongated support element being positioned proximate to the proximal end of the step structure and the second end of the elongated support element defining a hook-shaped element; and
   an axle structure removably coupling the first end of the elongated support element to the proximal end of the step structure, the axle structure configured to allow the elongated support element to shift between a first position, a second position, and a folded position.
9. The step apparatus of clause 8, wherein the elongated support element in the first position is at a substantially perpendicular angle in relation to the step structure, and the elongated support element in the second position is at a substantially obtuse angle in relation to the step structure.
10. The step apparatus of clause 8, wherein the step structure further includes an elongated slot and a recess.
11. The step apparatus of clause 10, wherein when the elongated support element rotates to the folded position, the recess receives the hook-shaped element.
12. The step apparatus of clause 8, wherein the hook-shaped element is configured to removably couple to a latch element of a door well of a vehicle.
13. The step apparatus of clause 12, wherein the elongated support element does not contact the door well of the vehicle when the hook-shaped element is removably coupled to the latch element.
14. The step apparatus of clause 12, wherein the proximal end of the step structure abuts the door well of the vehicle when the hook-shaped element is removably coupled to the latch element.
15. The step apparatus of clause 8, wherein the step structure defines a plurality of protrusions.
16. A method of using a step apparatus, comprising:
   providing a step structure and an elongated support element coupled to the step structure by an axle structure, the step structure having a proximal end and a distal end, the elongated support element having a hook-shaped element, and an axle coupling the elongated support element to the step structure for rotating the step structure relative to the elongated support element to at least one other position; and
   coupling the hook-shaped element to a latch element of a door well of a vehicle.
17. The method of clause 16, further comprising:
   decoupling the hook-shaped element of the elongated support element from the latch element of the door well of the vehicle.
18. The method of clause 17, further comprising:
   folding the elongated support element into the step structure.
19. The method of clause 16, wherein when coupling the hook-shaped element to the latch element, the proximal end of the step structure abuts the door well of the vehicle.
20. The method of clause 16, wherein when coupling the hook-shaped element to the latch element, the proximal end of the step structure abuts the door well of the vehicle and the elongated support element does not contact the door well of the vehicle.

## Claims

1. A step apparatus, comprising:
a step structure defining an axle bore;
an elongated support element coupled to the step structure, the elongated support element having a hook-shaped element and an axle aperture; and
an axle coupling the elongated support element to the step structure through the axle bore and axle aperture;
wherein the elongated support element is operable for rotating position about the axle, and the hook-shaped element is configured to be removably coupled to a latch element of a vehicle door well.

2. The step apparatus of claim 1, wherein the elongated support element is operable to rotate between a first position and a folded position, optionally wherein the elongated support element in the first position is at a substantially perpendicular angle in relation to the step structure.

3. The step apparatus of claim 1, wherein the elongated support element is removably coupled to the step structure, or wherein the axle aperture includes a first position and a second position through which the axle rotates.

4. The step apparatus of claim 1, wherein the axle is housed by the axle bore, the axle aperture, and one or more axle housings, optionally wherein the one or more axle housings include a spring.

5. A step apparatus, comprising:
a step structure having a proximal end and a distal end;
an elongated support element having a first end and a second end, the first end of the elongated support element being positioned proximate to the proximal end of the step structure and the second end of the elongated support element defining a hook-shaped element; and
an axle structure removably coupling the first end of the elongated support element to the proximal end of the step structure, the axle structure configured to allow the elongated support element to shift between a first position, a second position, and a folded position.

6. The step apparatus of claim 5, wherein the elongated support element in the first position is at a substantially perpendicular angle in relation to the step structure, and the elongated support element in the second position is at a substantially obtuse angle in relation to the step structure.

7. The step apparatus of claim 5, wherein the step structure further includes an elongated slot and a recess, optionally wherein when the elongated support element rotates to the folded position, the recess receives the hook-shaped element.

8. The step apparatus of claim 5, wherein the hook-shaped element is configured to removably couple to a latch element of a door well of a vehicle.

9. The step apparatus of claim 8, wherein the elongated support element does not contact the door well of the vehicle when the hook-shaped element is removably coupled to the latch element, or wherein the proximal end of the step structure abuts the door well of the vehicle when the hook-shaped element is removably coupled to the latch element.

10. The step apparatus of claim 5, wherein the step structure defines a plurality of protrusions.

11. A method of using a step apparatus, comprising:
providing a step structure and an elongated support element coupled to the step structure by an axle structure, the step structure having a proximal end and a distal end, the elongated support element having a hook-shaped element, and an axle coupling the elongated support element to the step structure for rotating the step structure relative to the elongated support element to at least one other position; and
coupling the hook-shaped element to a latch element of a door well of a vehicle.

12. The method of claim 11, further comprising:
decoupling the hook-shaped element of the elongated support element from the latch element of the door well of the vehicle.

13. The method of claim 12, further comprising:
folding the elongated support element into the step structure.

14. The method of claim 11, wherein when coupling the hook-shaped element to the latch element, the proximal end of the step structure abuts the door well of the vehicle.

15. The method of claim 11, wherein when coupling the hook-shaped element to the latch element, the proximal end of the step structure abuts the door well of the vehicle and the elongated support element does not contact the door well of the vehicle.
